# FASCICULE DE BREVET EUROPEEN

(11) **EP 0 955 208 B1**
(45) Date de publication et mention de la délivrance du brevet: **10.04.2002**
(21) Numéro de dépôt: 99401127.8
(22) Date de dépôt: 07.05.1999
(51) Int. Cl.: B60R 1/12

(54) **Système de signalisation d'obstacles dans un rétroviseur extérieur de véhicule**
System zur Hinderniserkennung und -anzeige im Aussenspiegel eines Fahrzeuges
Obstacle detection and indication system within the rearview mirror of a motor vehicle

(30) Priorité: 07.05.1998 FR 9805841
(43) Date de publication de la demande: 10.11.1999
(73) Titulaire: RENAULT, 92109 Boulogne-Billancourt (FR)
(72) Inventeur: Nguyen, Hoang Giang, 91130 Ris-Orangis (FR)

(56) Documents cités:
- EP-A- 0 381 016
- EP-A- 0 673 802
- WO-A-84/04174
- WO-A-85/01114
- DE-A- 4 015 329
- DE-C- 3 827 879
- GB-A- 2 311 265
- US-A- 4 882 565
- US-A- 5 235 316
- US-A- 5 313 335
- PATENT ABSTRACTS OF JAPAN vol. 011, no. 208 (P-593), 7 juillet 1987 (1987-07-07) & JP 62 028684 A (NAOTO OOTSUKI), 6 février 1987 (1987-02-06)

## Description

L'invention concerne un système de signalisation d'obstacles intégré dans au moins un rétroviseur extérieur d'un véhicule, en particulier pour les obstacles situés dans l'angle mort d'un rétroviseur classique.

Le problème posé par la détection d'obstacles, notamment de véhicules parvenant dans l'angle mort d'un rétroviseur de véhicule, automobile ou industriel, nécessite une interface homme-machine simple mais signalant efficacement leur présence au conducteur. Cette signalisation, ou alerte au conducteur, doit être réalisable quelles que soient les conditions climatiques de circulation ou d'éclairage de la scène en situation diurne ou nocturne, et doit être discrète tout en étant efficace pour ne pas perturber ni détourner le regard du conducteur. De plus, la présence d'un obstacle dans l'angle mort du miroir de rétrovision doit être signalée au conducteur en temps utile, ni trop tôt ni trop tard, et sans gêner les autres conducteurs dépassant le véhicule.

Une première solution actuelle consiste à implanter sur le bras du rétroviseur extérieur, côté conducteur, reliant le miroir à la carrosserie du véhicule, deux diodes électroluminescentes. Une première diode de couleur orange, indique la présence de l'obstacle détecté par un dispositif à émission infrarouge ou à émission hyperfréquence, tandis qu'une seconde diode, de couleur rouge, indique l'interdiction de changement de voie si le conducteur du véhicule actionne son clignotant gauche en présence d'un obstacle dans l'angle mort du rétroviseur gauche.

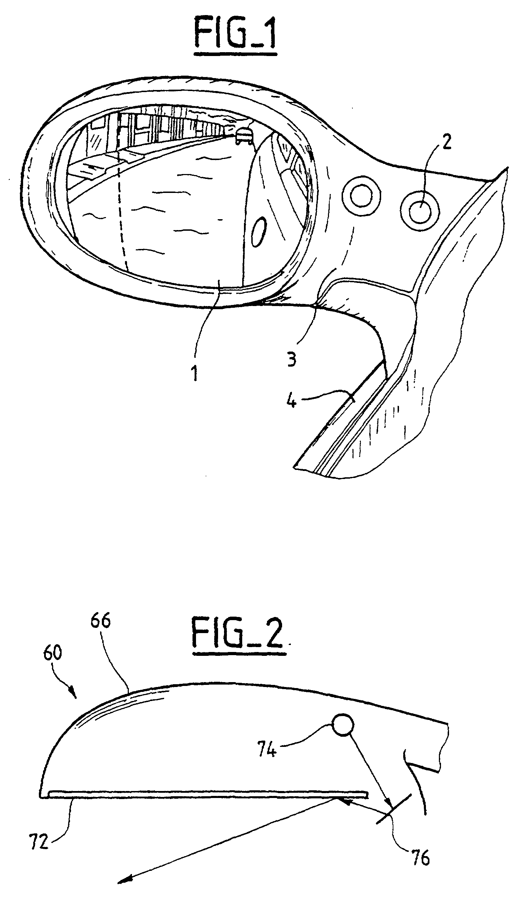

La figure 1 représente une vue de face d'un rétroviseur gauche 1 équipé de diodes de signalisation 2 implantées dans son bras 3 de maintien au véhicule 4.

Un tel dispositif présente trois inconvénients principaux. Le premier concerne le faible contraste des diodes, le jour, en particulier par temps ensoleillé, de sorte que le conducteur discerne difficilement si les diodes sont allumées ou éteintes. Par contre, par temps de nuit, la luminosité des diodes étant fixée pour un fonctionnement de jour, elles deviennent éblouissantes et gênent le conducteur et les autres usagers de la route.
Un troisième inconvénient provient du détournement du regard du conducteur du miroir de son rétroviseur vers les diodes situées sur le bras. Lors d'une manoeuvre de changement de voie, le conducteur du véhicule doit observer rapidement l'image de la scène dans son rétroviseur avant d'effectuer sa manoeuvre. Pour vérifier si la diode rouge d'interdiction est allumée, il doit impérativement déplacer sa petite fenêtre d'observation, de netteté maximale, vers cette diode rouge. Malgré la faible amplitude du détournement de son regard, le conducteur n'observe plus le miroir.

Une deuxième solution consiste actuellement à implanter un réseau de diodes électroluminescentes dans la carrosserie du véhicule, au niveau de l'aile arrière gauche, en regard du rétroviseur extérieur gauche, côté conducteur. La détection d'obstacles latéraux se fait par émission infrarouge proche.

Cette solution a pour conséquence de réduire le champ de rétrovision puisqu'il faut préserver une partie du champ pour observer les diodes. D'autre part, le design extérieur ne permet pas toujours une implantation de ce type, en particulier pour les véhicules de sport.

Si les solutions précédentes sont destinées à signaler au conducteur du véhicule équipé de ces dispositifs qu'il existe un véhicule dans l'angle mort de son rétroviseur, il existe également un autre principe de signalisation destinée dans ce cas aux autres usagers de la route que le conducteur lui-même. De tels dispositifs de signalisation fournissent au conducteur adjacent la signalisation d'un changement de direction, par la répétition du feu clignotant, ou la signalisation d'un freinage, par la répétition du feu de stop. Un dispositif est décrit dans le brevet américain US 5 587 699, déposé au nom de United Technologies Automotive Systems, comprenant un réseau de diodes électroluminescentes, disposées derrière le miroir du rétroviseur dont la surface a subi un traitement pour être semi-transparente. Ce traitement de surface est très coûteux d'une part et la présence du réseau de diodes dans le champ utile de vision du conducteur est gênant pour la sécurité d'autre part. Ce même inconvénient se trouve également dans une seconde variante décrite dans ce même brevet, comprenant, comme le montre la figure 2, une lampe 74 placée derrière le miroir 72 du rétroviseur 60 mais se réfléchissant dans un miroir secondaire 76 disposé face au miroir de rétrovision principal et se trouvant dans le champ de vision du conducteur. L'image de la lampe logée dans le boîtier 66 du rétroviseur, derrière le miroir, est destinée aux autres usagers de la route, circulant en parallèle au véhicule équipé. Un inconvénient supplémentaire de ce dispositif est dû à l'augmentation du déport hors tout du rétroviseur, puisque l'espace supplémentaire pour loger le miroir secondaire doit être hors champ de vision du miroir.

Un dispositif de rétrovision suivant les caractéristiques du préambule de la revendication 1 est dévoilé dans le document DE-A-4 015 329.

Le but de l'invention est de pallier ces inconvénients en proposant d'utiliser une partie non utile du miroir conventionnel d'un rétroviseur pour afficher une information d'alerte au conducteur du véhicule par réflexion directe sur cette partie du miroir.

Pour cela, l'objet de l'invention est un système de rétrovision pour véhicule, comprenant un miroir encastré dans un boîtier de protection raccordé à la carrosserie du véhicule par un bras, caractérisé en ce que :
- le bord du boîtier présente, à l'extrémité opposée au bras de raccordement du rétroviseur à la carrosserie du véhicule, une épaisseur moyenne déterminée et est recourbé devant le pourtour du miroir pour se réfléchir dans ce dernier, hors du champ de vision réglementaire non masqué par le boîtier,
et en ce qu'il comporte :
- un afficheur lumineux, implanté dans le bord du boîtier, de manière à ce que son image virtuelle obtenue par réflexion directe dans le miroir soit dans le champ de vision du conducteur, hors du champ réglementaire ;
- un dispositif de détection d'obstacles dans l'angle mort du rétroviseur ;
- un dispositif de couplage entre l'afficheur lumineux et le détecteur d'obstacles assurant l'allumage de l'afficheur.

Selon une autre caractéristique, le système de rétrovision comprend un afficheur à diodes électroluminescentes ou à cristaux liquides ou à plasma.

D'autres caractéristiques et avantages de l'invention apparaîtront à la lecture de la description d'un exemple de réalisation, illustré par les figures suivantes qui sont :
- la figure 3 : un rétroviseur conventionnel vu de face ;
- la figure 4 : une vue en coupe transversale d'un rétroviseur 4 équipé d'une diode selon l'invention ;
- la figure 5 : un schéma d'une vue de face d'un rétroviseur équipé de diodes selon l'invention ;
- la figure 6 : une vue en coupe partielle d'un rétroviseur équipé de diodes selon l'invention ;
- la figure 7 : un schéma d'un système de rétrovision selon l'invention ;
- la figure 8 : une vue de face d'un rétroviseur équipé d'un système de signalisation à diodes selon l'invention.

Les éléments portant les mêmes références sur les différentes figures remplissent les mêmes fonctions en vue des mêmes résultats.

Le système de rétrovision selon l'invention utilise un rétroviseur qui comprend un miroir encastré dans un boîtier de protection. Habituellement, le bord périphérique du boîtier dépassant du miroir a pour rôle de diminuer l'espace turbulent se trouvant devant le miroir. En augmentant le bord périphérique du boîtier, on parvient à diminuer l'écoulement turbulent de l'air devant le miroir et à diminuer la projection des gouttes d'eau sur le miroir en cas de pluie.

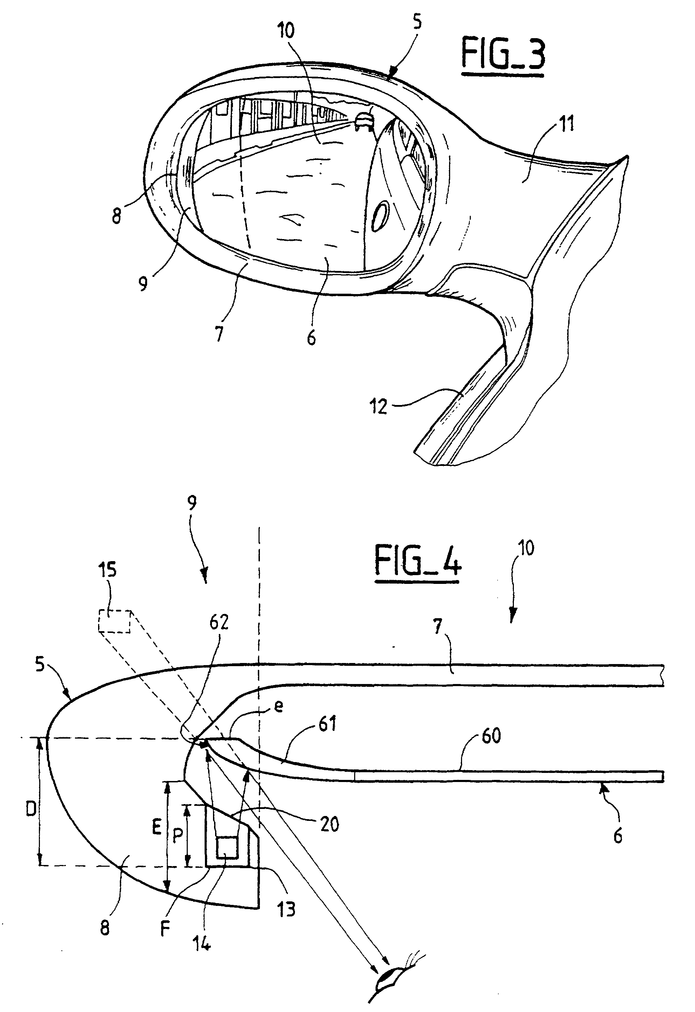

Sur la vue de face de la figure 3, concernant un rétroviseur 5 dont le miroir 6 est encastré dans un boîtier 7 de protection, on constate que le bord périphérique 8 du boîtier, dépassant du miroir, se reflète dans une zone 9 du miroir. Cette zone 9 est inutile à la rétrovision pour le conducteur, dont le champ libre 10 utile à la vision arrière et latérale, qui est réglementé par les normes de la rétrovision latérale, est compris entre cette zone 9 et le bord du rétroviseur adjacent au bras 11 qui raccorde le rétroviseur à la carrosserie 12 du véhicule.

L'invention propose d'utiliser le principe de réflexion directe du miroir de rétrovision, dans la partie périphérique à l'extrémité opposée au bras de maintien, hors champ de vision réglementaire, pour visualiser un afficheur lumineux disposé devant le miroir. Cet afficheur peut être par exemple une diode électroluminescente, ou une matrice de diodes, ou bien un afficheur à cristaux liquides ou à plasma. Cet afficheur de signalisation destiné à alerter le conducteur en cas de détection d'obstacles dans l'angle mort du rétroviseur n'occasionne aucun détournement du regard du conducteur lors de l'observation de ces signaux d'alerte.

La figure 4 illustre le montage d'un afficheur lumineux dans le rétroviseur 5, d'après une vue en coupe transversale.

Un miroir 6 est encastré à l'intérieur d'un boîtier 7, et est constitué par exemple d'une partie plane 60 et d'une partie bombée 61 à l'extrémité opposée au bras de maintien du rétroviseur sur le véhicule, destinée à offrir une vision grand angle. Le bord 8 du boîtier 7 présente une épaisseur moyenne E déterminée, à l'extrémité libre du rétroviseur, opposée au bras de maintien à la carrosserie, et est recourbé devant le pourtour 62 du miroir pour se réfléchir dans ce dernier, hors du champ de vision réglementaire 10.

Un logement 13 est réalisé dans l'épaisseur de ce bord 8 du boîtier pour y implanter un afficheur 14, qui se reflète directement dans le miroir. Son image n'est pas dans le champ de vision réglementaire 10, utile pour voir les véhicules arrivant derrière le véhicule en question, mais dans la zone initialement inutile 9 du champ de vision du conducteur qui n'y voyait que le reflet du bord 8 du rétroviseur. Grâce à ce montage, le conducteur aperçoit dans son rétroviseur, sans détourner le regard, l'image virtuelle 15 de l'afficheur, émettant un signal d'alerte en cas de présence d'obstacles. Cette image virtuelle, qui semble être placée derrière le miroir, ne vient pas modifier la scène de rétrovision réglementaire délivrée par la fonction principale du miroir du rétroviseur.

Le logement de l'afficheur 14, à diodes par exemple, doit être suffisamment profond dans l'épaisseur du bord 8 du boîtier du rétroviseur pour qu'il émette un signal lumineux au contraste renforcé, notamment en plein jour. Le boîtier étant généralement en plastique sombre, voire de couleur noire, le signal constitue ainsi un point lumineux sur un contour et un fond noirs. Une plaque transparente 20 ferme le logement pour protéger les diodes ou les cristaux liquides de l'afficheur contre l'humidité et le gel par exemple. Elle peut être réalisée en poly-méthacrylate de Méthyle (P.M.M.A.), appelé autrement plexiglass.

Les diodes de l'afficheur sont par exemple de type CMS, qui sont des composants à montage en surface, de petite taille et de poids très faible. Dans un exemple de réalisation numérique, on peut imaginer que la distance D entre l'extrémité e de la partie bombée 61 du miroir 6 et le fond F du logement 13 est comprise entre 10 et 15 mm, de sorte que la profondeur P du logement est d'environ 3 mm.

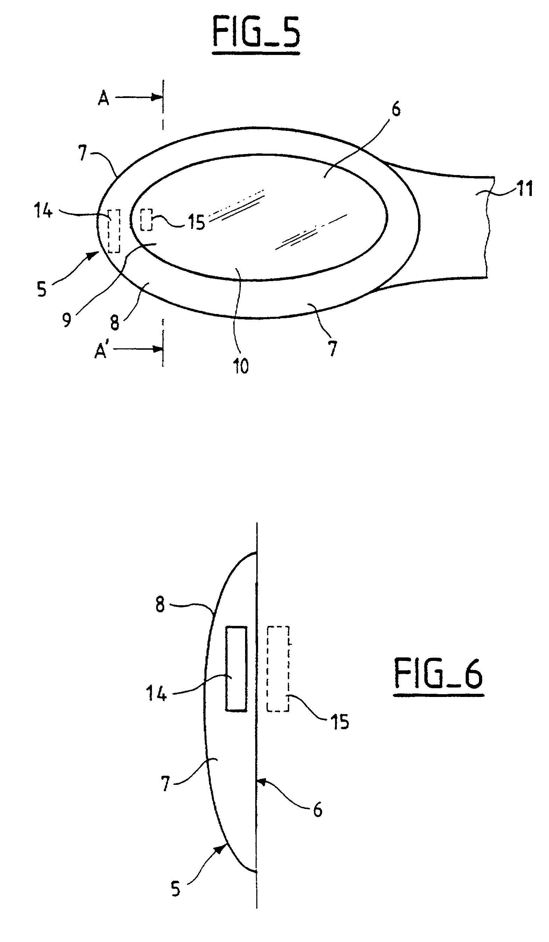

La figure 5 est une vue de face d'un rétroviseur 5 équipé de diodes électroluminescentes 14 implantées dans le bord 8 du boîtier 7 dans lequel est encastré le miroir 6. La zone utile 10 du miroir est comprise entre l'extrémité du boîtier 7 reliée au bras de maintien 11 et la ligne AA' matérialisée en pointillés au-delà de laquelle se situe la zone 9 hors champ de vision réglementaire, dans laquelle se reflètent à la fois le bord 8 du boîtier et les diodes.

La figure 6 est une vue en coupe partielle d'un rétroviseur 5 selon l'invention, dans le boîtier 7 duquel est logé un afficheur à diodes 14 par exemple qui se reflètent directement dans le miroir 6, encastré et protégé par le bord 8 du boîtier. L'image virtuelle 15 de ces diodes est représentée en pointillés de l'autre côté du miroir.

Un tel rétroviseur équipé ainsi d'un afficheur, à diodes par exemple, est couplé à un dispositif de détection d'obstacles, situés dans l'angle mort du rétroviseur.

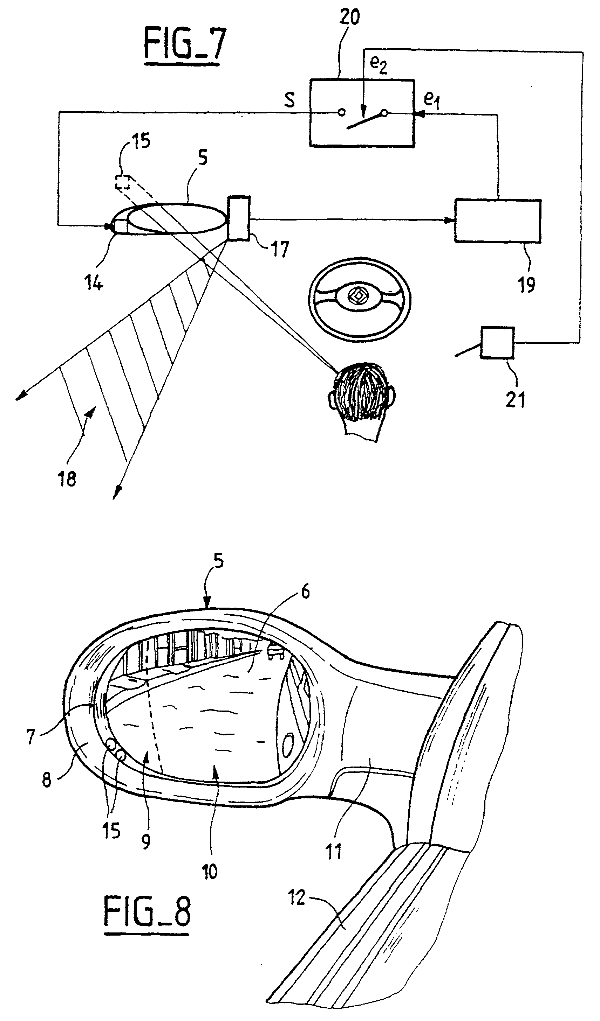

La figure 7 est un schéma représentatif du système de rétrovision complet selon l'invention.

Ce système comprend un rétroviseur 5 équipé d'un afficheur lumineux 14 et associé à un dispositif 17 détecteur d'obstacles, destiné à observer en permanence la scène routière située dans l'angle mort du rétroviseur. Le champ 18 de détection d'obstacles dans l'angle mort est matérialisé par des traits hachurés. Ce dispositif de détection, qui peut être par exemple une caméra ou un radar télémétrique, est relié à l'afficheur par un dispositif de couplage, comprenant tout d'abord un module 19 de traitement électronique du signal qu'il délivre. La sortie de ce module 19 est envoyée sur une des voies d'entrée e₁ d'un boîtier de commutation 20, dont l'autre voie d'entrée e₂ est connectée au boîtier 21 de signalisation de changement de direction. Ainsi, dès que le conducteur actionne le clignotant signalant son intention de changer de direction, le module de traitement 19 envoie un signal de commande S d'allumage de l'afficheur implanté dans le rétroviseur, qui émet alors un signal d'alerte lumineux au conducteur. Lorsque celui-ci décide par exemple de tourner à gauche ou de dépasser le véhicule qui le précède, il met en marche son clignotant et regarde dans son rétroviseur si des véhicules sont sur sa nouvelle trajectoire. Ceux qui se situent dans l'angle mort sont détectés et signalés par l'allumage de l'afficheur dans le champ de vision non réglementaire du rétroviseur.

La figure 8 est un rétroviseur 5 vu de face, sur lequel on distingue l'image virtuelle 15 d'un afficheur à 2 diodes implantées dans le bord 8 du boîtier 7. En cas d'alerte du conducteur à propos d'un obstacle survenant dans l'angle mort du rétroviseur, l'afficheur est allumé et son signal d'alerte apparaît dans le champ de vision du conducteur, mais à côté de la zone réglementaire 10 pour ne pas gêner sa perception de la scène arrière.

Les principaux avantages de l'invention sont tout d'abord l'exploitation de la zone inutile du miroir de rétrovision conventionnel d'un véhicule, tout en assurant la conservation du champ de vision réglementaire.

Elle utilise la réflexion directe, dans une zone du miroir ne servant pas à l'observation de la scène de rétrovision, d'un afficheur lumineux pour renvoyer des signaux d'alerte uniquement -dans le champ de vision directe du conducteur lorsque ce dernier regarde dans son rétroviseur pour effectuer un changement de file.

De plus, le système selon l'invention respecte la côte hors tout du déport occasionné par le rétroviseur extérieur, sans augmenter le coefficient de frottement dans l'air, nommé Cx, du véhicule.

Il est également intéressant de constater que le système a un coût très faible, puisqu'aucune technique de traitement de surface du miroir n'est utilisée, comme c'est le cas dans certaines réalisations de l'art antérieur qui nécessitent un miroir semi-transparent.

L'invention s'applique à tous les dispositifs de signalisation de la présence d'obstacles, issus des dispositifs de détection d'obstacles dans l'angle mort du rétroviseur d'un véhicule.

Bien entendu, l'invention ne se limite pas au seul rétroviseur gauche d'un véhicule ou placé du côté du conducteur, mais peut être appliquée aux deux rétroviseurs extérieurs. De même, elle s'applique aussi bien à un véhicule automobile, qu'à un véhicule industriel ou utilitaire ou même à un engin de travaux publics.

## Revendications

1. Système de rétrovision pour véhicule, comprenant un miroir encastré dans un boîtier de protection raccordé à la carrosserie du véhicule par un bras et un dispositif (17) de détection d'obstacles dans l'angle mort du rétroviseur, dont le bord (8) du boîtier (7) présente, à l'extrémité opposée au bras (11) de raccordement du rétroviseur (5) à la carrosserie (12) du véhicule, une épaisseur moyenne (E) déterminée,
comportant
un afficheur lumineux (14), implanté dans le bord (8) du boîtier (7), et
un dispositif de couplage entre l'afficheur lumineux (14) et le détecteur d'obstacles (17) assurant l'allumage de l'afficheur, **caractérisé en ce que** :
a) le bord du boîtier est recourbé devant le pourtour (62) du miroir (6) pour se réfléchir dans ce dernier, hors du champ de vision réglementaire (10) non masqué par le boîtier,
b) l'implantation de l'afficheur lumineux (14) dans le bord (8) est réalisée de manière à ce que son image virtuelle (15) obtenue par réflexion directe dans le miroir (6) soit dans le champ de vision du conducteur, hors du champ réglementaire.

2. Système de rétrovision selon la revendication 1, **caractérisé en ce que** l'afficheur lumineux (14) est implanté dans un logement (13) réalisé dans l'épaisseur du bord (8) du boîtier (7) du rétroviseur (5) de façon à assurer un contraste renforcé, notamment en plein jour, au signal lumineux émis par l'afficheur.

3. Système de rétrovision selon la revendication 2, **caractérisé en ce que** le logement (13) de l'afficheur lumineux (14) est fermé par une plaque (20) transparente de protection contre l'humidité ou le gel.

4. Système de rétrovision selon l'une des revendications 2 ou 3, **caractérisé en ce que** l'afficheur est constitué par un réseau ou une matrice de plusieurs diodes électroluminescentes.

5. Système de rétrovision selon l'une des revendications 2 ou 3, **caractérisé en ce que** l'afficheur est constitué par des cristaux liquides ou un écran à plasma.

6. Système de rétrovision selon la revendication 1, **caractérisé en ce que** le dispositif de couplage entre l'afficheur lumineux (14) et le dispositif (17) détecteur d'obstacles est constitué par :
- un module (19) de traitement électronique du signal délivré par le détecteur (17) ;
- un boîtier (21) de signalisation de changement de direction ;
- un boîtier de commutation (20), recevant sur ses deux voies d'entrée d'une part le signal délivré par le module (19) de traitement et d'autre part, le signal délivré par le boîtier de signalisation (21), et délivrant sur sa voie de sortie un signal (S) de commande d'allumage de l'afficheur implanté dans le rétroviseur pour qu'il émette un signal d'alarme lumineux au conducteur.

7. Système de rétrovision selon la revendication 3, **caractérisé en ce que** la plaque de protection (20) du logement (13) de l'afficheur lumineux (14) est réalisée poly-méthacrylate de Méthyle (P.M.M.A.).

## Claims

1. A rear view system for a vehicle comprising a mirror housed in a protective casing connected to the body of the vehicle by an arm and a device (17) for detecting obstacles in the blind spot of the rear view mirror, in which the edge (8) of the casing (7) at the end opposite to the arm (11) connecting the rear view mirror (5) to the body (12) of the vehicle is of a given mean thickness (E), comprising a light display device (14) installed in the edge (8) of the casing (7), and a coupling device between the light display device (14) and the obstacle detector (17) for ensuring lighting of the display device, **characterised in that**:
a) the edge of the casing is curved in front of the periphery (62) of the mirror (6) to be reflected in the latter, outside the regulation field of vision (10) which is not masked by the casing, and
b) installation of the light display device (14) in the edge (8) is effected in such a way that its virtual image (15) obtained by direct reflection in the mirror (6) is in the field of vision of the driver, outside the regulation field.

2. A rear view system according to claim 1 **characterised in that** the light display device (14) is installed in a housing (13) provided in the thickness of the edge (8) of the casing (7) of the rear view mirror (5) in such a way as to ensure enhanced contrast, in particular in full daylight, for the light signal emitted by the display device.

3. A rear view system according to claim 2 **characterised in that** the housing (13) of the light display device (140 is closed by a transparent plate (20) for affording protection against humidity or frost.

4. A rear view system according to one of claims 2 and 3 **characterised in that** the display device is formed by a network or a matrix of a plurality of light emitting diodes.

5. A rear view system according to one of claims 2 and 3 **characterised in that** the display device is formed by liquid crystals or a plasma screen.

6. A rear view system according to claim 1 **characterised in that** the coupling device between the light display device (14) and the obstacle detecting device (17) is formed by:
- a module (19) for electronic processing of the signal delivered by the detector (170,
- a box (21) for signalling a change in direction,
- a switch box (20) receiving at its two input paths on the one hand the signal delivered by the processing module (19) and on the other hand the signal delivered by the signalling box (21) and delivering at its output path a signal (S) for controlling lighting of the display device installed in the rear view mirror for it to emit a light alarm signal to the driver.

7. A rear view system according to claim 3 **characterised in that** the protective plate (20) of the housing (13) of the light display device (14) is made of methyl polymethacrylate (PMMA).

## Patentansprüche

1. Rückblicksystem für Fahrzeuge, mit einem Spiegel, der in ein Schutzgehäuse eingesetzt ist, das mit der Karosserie des Fahrzeugs mittels eines Armes verbunden ist und mit einer Anordnung (17) zur Feststellung von Hindernissen im toten Winkel des Rückspiegels, wobei der Rand (8) des Gehäuses (7) an seinem dem Verbindungsarm (11) des Rückspiegels (5) mit der Karosserie (12) des Fahrzeugs abgewandten Ende eine gegebene mittlere Dicke E aufweist, mit einer leuchtenden Anzeige (14), die in den Rand (8) des Gehäuses (7) eingesetzt ist und mit einer Kopplungsanordnung zwischen der leuchtenden Anzeige (14) und der Feststellanordnung (17) für die Hindernisse, die für das Aufleuchten der Anzeige sorgt, **dadurch gekennzeichnet, dass**
a) der Rand des Gehäuses vor dem Umfang (62) des Spiegels (6) gekrümmt ist, sodass er sich in letzterem spiegelt ausserhalb des normalen Sichtfeldes (10), das nicht vom Rand abgedeckt wird
b) das Einsetzen der leuchtenden Anzeige (14) in den Rand (8) derart erfolgt ist, dass ihr virtuelles Bild (15), das durch direkte Reflexion durch den Spiegel (6) entsteht, im Sichtbereich des Fahrers liegt, jedoch ausserhalb des normalen Sichtfeldes.

2. Rückblicksystem nach Anspruch 1, **dadurch gekennzeichnet, dass** die leuchtende Anzeige (14) in eine Aussparung (13) eingesetzt ist, die in der Dicke des Randes (8) des Gehäuses (7) des Rückspiegels (5) derart vorgesehen ist, dass ein starker Kontrast des von der Anzeige ausgesandten Lichtsignals gewährleistet ist, insbesondere bei Tag.

3. Rückblicksystem nach Anspruch 2, **dadurch gekennzeichnet, dass** die Aussparung (13) für die leuchtende Anzeige (14) durch eine transparente Platte (20) zum Schutz gegen Witterungseinflüsse verschlossen ist.

4. Rückblicksystem nach einem der Ansprüche 2 oder 3, **dadurch gekennzeichnet, dass** die Anzeige aus mehreren gitter- oder matrixförmig angeordneten Elektrolumineszenzdioden besteht.

5. Rückblicksystem nach einem der Ansprüche 2 oder 3, **dadurch gekennzeichnet, dass** die Anzeige aus Flüssigkristallen oder aus einem Plasmaschirm besteht.

6. Rückblicksystem nach Anspruch 1, **dadurch gekennzeichnet, dass** die Koppelvorrichtung zwischen der leuchtenden Anzeige (14) und der Vorrichtung (17) zur Feststellung von Hindernissen besteht aus:
- einem elektronischen Verarbeitungsmodul (19) für das von der Feststellvorrichtung (17) abgegebene Signal;
- einem Umschalter (20), dessen beiden Eingängen zum einen das vom Verarbeitungsmodul (19) abgegebene Signal und zum anderen das von der Anordnung zur Anzeige eines Richtungswechsels (21) abgegebene Signal zugeführt werden und dessen Ausgang ein Steuersignal (S) zum Einschalten der in den Rückspiegel eingesetzten Anzeige abgibt, damit diese für den Fahrer ein optisches Warnsignal erzeugt.

7. Rückblicksystem nach Anspruch 3, **dadurch gekennzeichnet, dass** die Schutzplatte (20) für die leuchtende Anzeige (14) aus einem Polymethacrylat des Methyls (P.M.M.A.) besteht.
